(19) **Europäisches Patentamt / European Patent Office / Office européen des brevets**

(11) **EP 4 169 879 A1**

(12) ## EUROPEAN PATENT APPLICATION
published in accordance with Art. 153(4) EPC

(43) Date of publication:
**26.04.2023 Bulletin 2023/17**

(21) Application number: **21825224.5**

(22) Date of filing: **17.06.2021**

(51) International Patent Classification (IPC):
**C01G 53/00** (2006.01)　　**H01M 4/525** (2010.01)

(52) Cooperative Patent Classification (CPC):
**C01G 53/00; H01M 4/525;** Y02E 60/10

(86) International application number:
**PCT/JP2021/022973**

(87) International publication number:
**WO 2021/256526 (23.12.2021 Gazette 2021/51)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **17.06.2020 JP 2020104550**

(71) Applicant: **Basf Toda Battery Materials LLC**
**Sanyo-Onoda Yamaguchi 756-0847 (JP)**

(72) Inventor: **MASAKI Ryuta**
**Sanyoonoda-shi, Yamaguchi 756-0847 (JP)**

(74) Representative: **Reitstötter Kinzebach**
**Patentanwälte**
**Im Zollhof 1**
**67061 Ludwigshafen (DE)**

(54) **METHOD FOR PRODUCING POSITIVE ELECTRODE ACTIVE MATERIAL FOR NON-AQUEOUS ELECTROLYTE SECONDARY BATTERY**

(57) This method is characterized by performing, at least in sequence: a step (1) for preparing a mixture by mixing, in a non-solvent system, a precursor compound containing at least nickel and a lithium compound; a step (2) for performing preliminary-baking on the mixture at 450-700 °C in a non-oxygen atmosphere; and a step (3) for performing, in an oxygen atmosphere, main-baking on the mixture which has been subjected to the preliminary-baking. According to this method, it is possible to easily produce a positive electrode active material which contains at least lithium and nickel, and can impart, to a non-aqueous electrolyte secondary battery, cycle characteristic, in particular, excellent cycle characteristics under high voltage.

[FIG. 1]

(a)
(b)
(c)

**Description**

TECHNICAL FIELD

The present invention relates to a method for producing a positive electrode active material for non-aqueous electrolyte secondary batteries, which can impart excellent cycle property, particularly excellent cycle property under high voltage, and can impart also excellent thermal stability to non-aqueous electrolyte secondary batteries.

BACKGROUND ART

As power sources for driving a mobile phone, a notebook computer, and the like, there are non-aqueous secondary batteries which are small and lightweight, and have high energy density Among them, lithium ion secondary batteries, in which a material such as lithium cobalt oxide or lithium nickel oxide is used as a positive electrode and which have a high charge/discharge capacity, are frequently used.

As a positive electrode active material for lithium ion secondary batteries, for example, there is an NCM-based positive electrode active material in which nickel elements are partially replaced with cobalt elements and into which manganese elements are introduced. Also, in view of expectation of giving a high capacity and a high energy density to lithium ion secondary batteries, there has been extensively studied an NCA-based positive electrode active material in which nickel elements are partially replaced with cobalt elements and into which aluminum elements are introduced.

Positive electrode active materials for lithium ion secondary batteries, typically including the NCA-based positive electrode active materials, require a certain amount of oxygen when reacting with the lithium source, thus, a high oxygen partial pressure is required particularly for a positive electrode active material with a high nickel content, which is expected to provide a high capacity. If this oxygen partial pressure is insufficient, it will be difficult to obtain the expected effects.

In addition, although a lithium ion secondary battery in which the positive electrode active material with a high nickel content is used as the positive electrode has a high energy density, it is generally inferior in cycle property, particularly cycle property under high voltage, due to the fact that oxygen is easily released from a crystal structure. In particular, it is known that release of oxygen causes thermal runaway in the lithium ion secondary battery, and therefore stabilization of the crystal structure is needed.

Accordingly, various methods have been proposed in order to solve the above problems, particularly for positive electrode active materials with a high nickel content, which are the NCA-based positive electrode active materials or the NCM-based positive electrode active materials.

For example, in a production method described in Patent Literature 1, in a composite oxide of the formula: $Li_yNi_{1-x}Co_{x1}M_{x2}O_2$ (M is at least one selected from Al, Fe, Mn, and B), particularly in the case of NCA-based composite oxides, attention is paid to the fact that Co becomes $Co^{3+}$ and thereby causes heterogeneous phases which become impurities during lithiation and impairs effect of imparting a high capacity. That is, in the method for producing the composite oxide, to a basic metal salt of the formula: $Ni^{2+}_{1-x}(Co^{2+}, Co^{3+})_{x1}M^{3+}_{x2}(OH)_{2-nz}(A^{n-}_z) \cdot mH_2O$ is added a lithium compound in an aqueous medium, and after spraying/drying or freezing/drying, preliminary calcination at about 300°C to about 500°C is performed in advance under a non-oxidizing atmosphere and calcination at about 600°C to about 900°C is performed under an oxidizing atmosphere, in order to suppress generation of $Co^{3+}$.

In a production method described in Patent Literature 2, attention is paid to the fact that in a lithium-transition metal composite oxide having a basic composition of $LiNiO_2$ or $LiCoO_2$ in which a ratio of lithium in a particle surface layer part composition is higher than a ratio of lithium in an average composition of the entire particles, by increasing the ratio of lithium in the surface layer part and subjecting a uniformly dispersed composite oxide to calcination under an oxygen atmosphere, increase in internal resistance can be suppressed even if stored for a long period of time in a charged state. That is, in the method for producing the lithium-transition metal composite oxide, a suspension prepared by suspending nickel hydroxide particles or cobalt hydroxide particles in an aqueous solution of a lithium compound is spray-dried to adhere lithium to a surface of the nickel hydroxide particles or a surface of the cobalt hydroxide particles, and after the obtained composite oxide is subjected to preliminary calcination at about 300°C to about 600°C under a nitrogen atmosphere, calcination is performed under an oxygen atmosphere.

In a production method described in Patent Literature 3, attention is paid to the fact that effect of improving charge/discharge property can be obtained by drying a mixture of lithium hydroxide with a nickel composite oxide under a reduced pressure atmosphere before calcination. That is, in the method for producing a lithium-nickel composite oxide, the mixture is dried at 40°C to 200°C under an atmosphere with a carbon dioxide gas partial pressure of 10Pa or less before performing calcination at 650°C to 800°C under an atmosphere with an oxygen content of 60% by volume or more.

CITATION LIST

PATENT LITERATURE

[Patent Literature 1] Japanese Laid-Open Patent Publication No. H10-316431
[Patent Literature 2] Japanese Laid-Open Patent Publication No. 2002-184403
[Patent Literature 3] Japanese Laid-Open Patent Publication No. 2010-052988

SUMMARY OF INVENTION

TECHNICAL PROBLEM

However, in the production method described in Patent Literature 1, a lithium compound must be added to a basic metal salt in an aqueous medium, followed by spraying/drying or freezing/drying, that is, these procedures are complicated. Moreover, although the NCA-based composite oxide obtained by this production method certainly does not impair effect of imparting a high capacity to lithium ion secondary batteries, it cannot improve cycle property. Further, Patent Literature 1 does not describe stability of the crystal structure of the NCA-based composite oxide.

In the production method described in Patent Literature 2, a suspension prepared by suspending nickel hydroxide particles or cobalt hydroxide particles in an aqueous solution of a lithium compound must be spray-dried, that is, this procedure is complicated. In addition, although a lithium ion secondary battery in which the lithium-transition metal composite oxide obtained by this production method is used as a positive electrode certainly suppresses increase in internal resistance even if stored for a long period of time in a charged state, it is still inferior in cycle property.

In the production method described in Patent Literature 3, since the mixture of lithium hydroxide with a nickel composite oxide is dried at a low temperature under a reduced pressure atmosphere before calcination, a lithium ion secondary battery in which the obtained lithium-nickel composite oxide is used as a positive electrode has improved charge/discharge property. However, the lithium-nickel composite oxide dried at such a low temperature cannot improve cycle property of the lithium ion secondary battery, particularly cycle property under high voltage.

The present invention has been made in view of conventional problems as described above, and an object of the present invention is to provide a method for easily producing a positive electrode active material capable of imparting cycle property, particularly excellent cycle property under high voltage, to non-aqueous electrolyte secondary batteries.

SOLUTION TO PROBLEM

In order to achieve the above object, the method for producing a positive electrode active material of the present invention is configured by performing calcination in two stages under different atmospheres, that is, performing in this order: calcination in a specific temperature range under a non-oxygen atmosphere; and calcination under an oxygen atmosphere, on a mixture of a precursor compound with a lithium compound.

A method for producing a positive electrode active material for non-aqueous electrolyte secondary batteries, according to the present invention, is a method for producing a positive electrode active material containing at least lithium (Li) and nickel (Ni), including at least, in this order:

a step (1) of mixing a precursor compound containing at least Ni with a lithium compound in a non-solvent system to prepare a mixture;
a step (2) of subjecting the mixture to preliminary calcination at 450°C to 700°C under a non-oxygen atmosphere; and
a step (3) of subjecting the mixture after the preliminary calcination to main calcination under an oxygen atmosphere.

ADVANTAGEOUS EFFECTS OF INVENTION

According to the present invention, it is possible to provide a method which can easily produce a positive electrode active material for non-aqueous electrolyte secondary batteries, capable of imparting excellent cycle property, particularly excellent cycle property under high voltage, and capable of imparting also excellent thermal stability to non-aqueous electrolyte secondary batteries, since the crystal structure is stable irrespective of high nickel content in the positive electrode active material.

BRIEF DESCRIPTION OF DRAWINGS

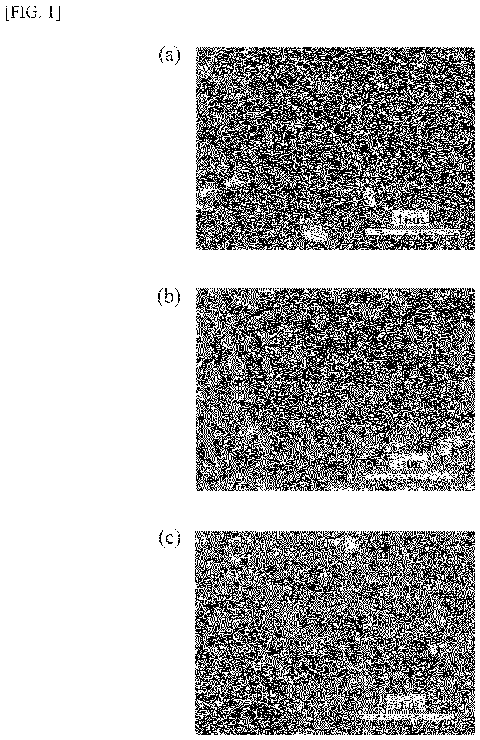

FIG. 1 shows electron micrographs of primary particles of the positive electrode active material obtained in each of Example 1 and Comparative Examples 1 to 2. FIG. 1(a) shows an electron micrograph of the positive electrode active material in Example 1, FIG. 1(b) shows an electron micrograph of the positive electrode active material in Comparative Example 1, and FIG. 1(c) shows an electron micrograph of the positive electrode active material in Comparative Example 2.

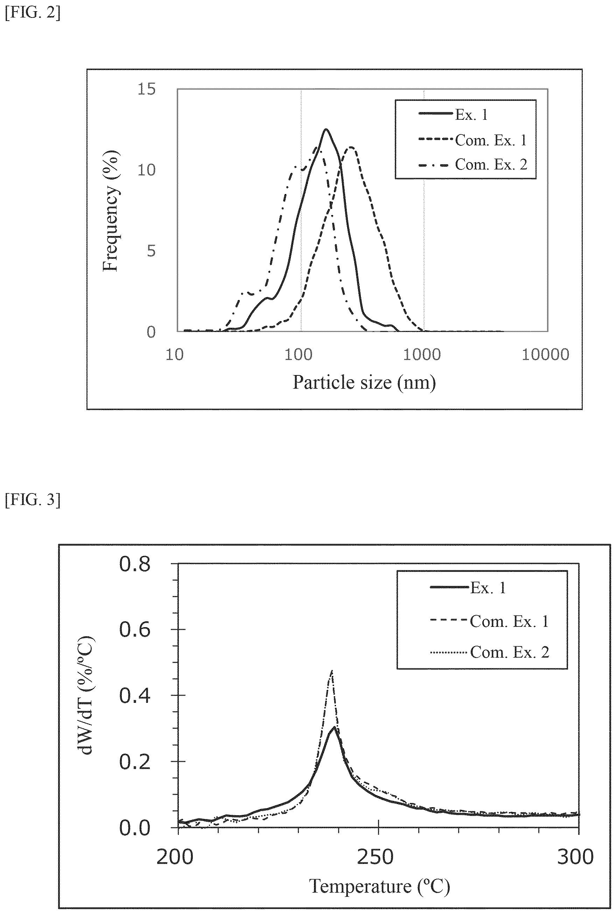

FIG. 2 includes particle size distribution curves showing relationship between a particle size and a frequency of the positive electrode active material obtained in each of Example 1 and Comparative Examples 1 to 2.

FIG. 3 includes graphs showing relationship between a temperature (T) and a value (dW/dT) obtained by differentiating a weight change (W) by the temperature (T), based on thermogravimetric differential thermal analysis results of the positive electrode active material obtained in each of Example 1 and Comparative Examples 1 to 2.

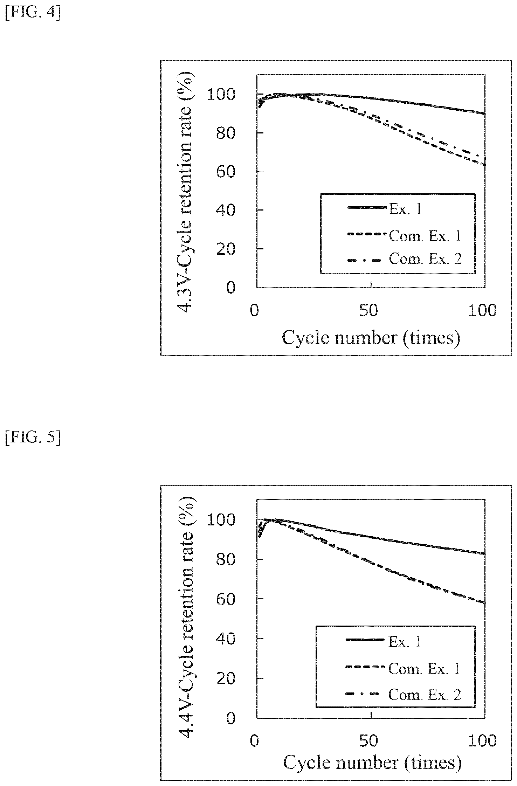

FIG. 4 includes graphs prepared by plotting a cycle retention rate in each cycle in a 100-cycle charge/discharge test in which the upper limit voltage is set to 4_30V, for each non-aqueous electrolyte secondary battery in which the positive electrode active material obtained in each of Example 1 and Comparative Examples 1 to 2 is used as a positive electrode.

FIG. 5 includes graphs prepared by plotting a cycle retention rate in each cycle in a 100-cycle charge/discharge test in which the upper limit voltage is set to 4.40V, for each non-aqueous electrolyte secondary battery in which the positive electrode active material obtained in each of Example 1 and Comparative Examples 1 to 2 is used as a positive electrode.

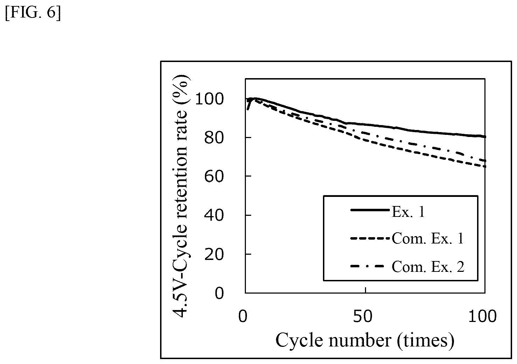

FIG. 6 includes graphs prepared by plotting a cycle retention rate in each cycle in a 100-cycle charge/discharge test in which the upper limit voltage is set to 4.50V, for each non-aqueous electrolyte secondary battery in which the positive electrode active material obtained in each of Example 1 and Comparative Examples 1 to 2 is used as a positive electrode.

DESCRIPTION OF EMBODIMENTS

Embodiments for performing the present invention will be described below. The following description of preferred embodiments is merely exemplary in nature and is not intended to limit the invention, its application or its uses.

<Method for producing positive electrode active material for non-aqueous electrolyte secondary batteries>

The production method according to the present invention is a method for producing a positive electrode active material containing at least Li and Ni. In this production method, there are performed at least the following steps, in this order:

(1) a step of mixing a precursor compound containing at least Ni with a lithium compound in a non-solvent system to prepare a mixture;
(2) a step of subjecting the mixture to preliminary calcination at 450°C to 700°C under a non-oxygen atmosphere; and
(3) a step of subjecting the mixture after the preliminary calcination to main calcination under an oxygen atmosphere.

[Step (1)]

In the step (1), a precursor compound containing at least Ni and a lithium compound are mixed with each other to prepare a mixture.

A method for synthesizing the precursor compound is not particularly limited. For example, there can be adopted a method in which: an aqueous solution containing an aqueous solution of a nickel compound and various aqueous solutions of compound(s) containing other element(s) according to a composition of the desired positive electrode active material is dropped into a reaction vessel in which an alkaline aqueous solution such as an aqueous sodium hydroxide solution or an ammonia solution is used as a mother liquor and stirred; pH is monitored and controlled so that it falls within an appropriate range while dropping also sodium hydroxide or the like thereinto; and these materials are coprecipitated primarily as hydroxides by a wet reaction.

In addition, in the reaction relating to the above synthesis, it is preferable that just after preparing the alkaline aqueous solution to be the mother liquor, inert gas or industrially preferably nitrogen gas is used to create a nitrogen atmosphere in the reaction vessel to reduce an oxygen concentration in a reaction vessel system and a solution as much as possible. If the oxygen concentration is too high, there is a possibility that the coprecipitated hydroxides are oxidized by residual oxygen in a predetermined amount or more and formation of aggregates by crystallization is hindered.

Examples of the nickel compound are not particularly limited, and include nickel sulfate, nickel oxide, nickel hydroxide, nickel nitrate, nickel carbonate, nickel chloride, nickel iodide, metallic nickel, and the like.

Examples of the other element(s) constituting the positive electrode active material are not particularly limited, and include cobalt (Co), aluminum (Al), manganese (Mn), titanium (Ti), magnesium (Mg), zinc (Zn), niobium (Nb), tungsten (W), molybdenum (Mo), vanadium (V), chromium (Cr), calcium (Ca), iron (Fe), gallium (Ga), strontium (Sr), yttrium (Y), ruthenium (Ru), indium (In), tin (Sn), tantalum (Ta), bismuth (Bi), zirconium (Zr), boron (B), and the like.

Examples of the compound(s) containing other element(s) are not particularly limited, and include a cobalt compound, an aluminum compound, a manganese compound, a titanium compound, a magnesium compound, a zinc compound, a niobium compound, a tungsten compound, and the like.

Examples of the cobalt compound are not particularly limited, and include cobalt sulfate, cobalt oxide, cobalt hydroxide, cobalt nitrate, cobalt carbonate, cobalt chloride, cobalt iodide, metallic cobalt, and the like.

Examples of the aluminum compound are not particularly limited, and include aluminum sulfate, aluminum oxide, aluminum hydroxide, aluminum nitrate, aluminum carbonate, aluminum chloride, aluminum iodide, sodium aluminate, metallic aluminum, and the like.

Examples of the manganese compound are not particularly limited, and include manganese sulfate, manganese oxide, manganese hydroxide, manganese nitrate, manganese carbonate, manganese chloride, manganese iodide, metallic manganese, and the like.

Examples of the titanium compound are not particularly limited, and include titanyl sulfate, titanium oxide, titanium hydroxide, titanium nitrate, titanium carbonate, titanium chloride, titanium iodide, metallic titanium, and the like.

Examples of the magnesium compound are not particularly limited, and include magnesium sulfate, magnesium oxide, magnesium hydroxide, magnesium nitrate, magnesium carbonate, magnesium chloride, magnesium iodide, metallic magnesium, and the like.

Examples of the zinc compound are not particularly limited, and include zinc sulfate, zinc oxide, zinc hydroxide, zinc nitrate, zinc carbonate, zinc chloride, zinc iodide, metallic zinc, and the like.

Examples of the niobium compound are not particularly limited, and include niobium oxide, niobium chloride, lithium niobate, niobium iodide, and the like.

Examples of the tungsten compound are not particularly limited, and include tungsten oxide, sodium tungstate, ammonium paratungstate, hexacarbonyl tungsten, tungsten sulfide, and the like.

A blending ratio of the nickel compound to the various compounds containing other element(s) may be appropriately adjusted such that a ratio of an amount of Ni to an amount of various other element(s) is the desired one, taking into consideration the composition of the desired positive electrode active material.

When the desired positive electrode active material has, for example, a composition represented by the following formula (I):

$$Li_aNi_bM_{1-b}O_2 \qquad (I)$$

wherein M is at least one element other than Li, Ni and O, a is $0.95 \leq a \leq 1.15$, and b is $0.80 \leq b < 1$, the ratio of the amount of Ni to the amounts of various other element(s), i.e., b in the formula (I) is preferably $0.80 \leq b < 1$, more preferably $0.82 \leq b \leq 0.98$, and particularly preferably $0.82 \leq b \leq 0.96$.

Examples of M in the formula (I) include Co, Al, Mn, Ti, Mg, Zn, Nb, W, Mo, V, Cr, Ca, Fe, Ga, Sr, Y, Ru, In, Sn, Ta, Bi, Zr, B, and the like, which are exemplified as the other element(s). Among these, particularly Co and/or Al is preferably contained as M.

A suitable pH range in synthesizing the precursor compound is preferably 11.0 to 13.5. By controlling the pH during the reaction within such a range, aggregated particles with a small average secondary particle size can be synthesized when the pH is high, and aggregated particles with a large average secondary particle size can be synthesized when the pH is low.

It is preferable to perform a washing treatment of the precursor compound obtained by a wet reaction as described above, and then perform a drying treatment after dehydration.

By performing the washing treatment, it is possible to wash away impurities such as sulfate groups, carbonate groups and Na contents which are taken into the aggregated particles during the reaction or which adhere to the surface layer. As the washing treatment, there can be adopted a method of performing Nutsche washing using a Buchner funnel if an amount of the impurities is small, or a method of feeding a suspension after the reaction to a press filter, washing the suspension with water, and dehydrating the washed suspension. Pure water, an aqueous sodium hydroxide solution, an aqueous sodium carbonate solution, or the like can be used for the washing treatment, and it is industrially preferable to use pure water. If a residual amount of the sulfate groups is large, it is preferable to perform a washing treatment with an aqueous sodium hydroxide solution whose pH is controlled according to the residual amount.

The precursor compound synthesized in this way and the lithium compound are mixed with each other at a predetermined ratio to prepare a mixture, and this mixing is performed in a non-solvent system. By mixing the precursor compound with the lithium compound in a non-solvent system, there can be simply and conveniently mixed with each other for example, the compound(s) of the element(s) represented by M in the formula (I) and/or other additive compound(s) containing element(s) not substituted in the precursor compound, in addition to the precursor compound and various lithium compounds.

It is to be noted "mixing in a non-solvent system" in the production method of the present invention means that compounds are mixed with each other without using a solvent such as water, that is, compounds are mixed with each other not in a solution state such as an aqueous solution. For example, a procedure of "mixing in a non-solvent system" includes: weighing powder of the precursor compound and powder of the lithium compound so as to have a predetermined mixing ratio; and mixing these powder with each other in a dry system.

The lithium compound is not particularly limited, and various lithium salts can be used. Examples of the lithium compound include anhydrous lithium hydroxide, lithium hydroxide monohydrate, lithium nitrate, lithium carbonate, lithium acetate, lithium bromide, lithium chloride, lithium citrate, lithium fluoride, lithium iodide, lithium lactate, lithium oxalate, lithium phosphate, lithium pyruvate, lithium sulfate, lithium oxide, and the like. Among these, anhydrous lithium hydroxide and lithium hydroxide monohydrate are particularly preferably used.

In the present invention, it is believed what is important in selecting the lithium compound is related to surely react the precursor compound with the lithium compound so as not to cause heterogeneous phases in the step (2) of subjecting the mixture to preliminary calcination. It is also known the reaction of the precursor compound with the lithium compound starts at a temperature lower than a melting point of the lithium compound.

Then, in the present invention, when lithium hydroxide is used as the lithium compound for example, by setting a temperature of the preliminary calcination to a temperature higher than 450°C, which is about 20°C lower than lithium hydroxide's melting point of 462°C, the precursor compound and lithium hydroxide can be surely reacted so as not to cause heterogeneous phases, thereby obtaining the desired positive electrode active material.

A blending ratio of the lithium compound to the precursor compound may be appropriately adjusted such that a ratio of an amount of Li to the total amount of an amount of Ni and an amount of optional various other element(s) achieve the desired one, in consideration of the composition of the desired positive electrode active material.

When the desired positive electrode active material has, for example, a composition represented by the following formula (I):

$$Li_aNi_bM_{1-b}O_2 \qquad (I)$$

wherein M is at least one element other than Li, Ni and O, a is $0.95 \leq a \leq 1.15$, and b is $0.80 \leq b < 1$, as described above, the ratio of the amount of Li to the total amount of the amount of Ni and the amount of optional various other element(s), i.e., a in the formula (I) is preferably $0.95 \leq a \leq 1.15$, and more preferably $0.96 \leq a \leq 1.10$.

[Step (2)]

In the step (2), the mixture prepared in the step (1) is subjected to preliminary calcination under a non-oxygen atmosphere. One of the major characteristics of the production method of the present invention is that this step (2) is performed.

As described above, a positive electrode active material such as a positive electrode active material which is a nickel-based layered compound having a crystal structure belonging to the space group R-3m generally requires a certain amount of oxygen during reaction with the lithium source. In particular, in order to obtain a positive electrode active material with a high Ni content, a high oxygen partial pressure is required. However, it is difficult to expect a high capacity from a non-aqueous electrolyte secondary battery in which a positive electrode active material is used as the positive electrode, which is produced by performing calcination in a state being lacking for this oxygen partial pressure.

However, when performing not only calcination in a state being lacking for this oxygen partial pressure, i.e., calcination under a non-oxygen atmosphere but also calcination under an oxygen atmosphere after the calcination under the non-oxygen atmosphere, an initial discharge capacity can be reduced while specifically maintaining an initial charge capacity. In addition, it has been found that effect of improving cycle property, particularly cycle property under high voltage is remarkable, and further, effect of improving thermal stability is also obtained, achieving the present invention.

It is not clear why effect of remarkably improving cycle property and effect of improving thermal stability are obtained by performing the preliminary calcination under a non-oxygen atmosphere and the main calcination under an oxygen atmosphere in this order. For example, it can be supposed as follows.

In general, when trying to obtain a positive electrode active material containing Ni, particularly a positive electrode active material with a high Ni content in a metal-site, the crystal structure becomes unstable since Ni has strong reducing property, that is, Ni is easily reduced to be divalent, for this reason, divalent Ni in the metal-site stays therein or moves to a Li-site. It is also known that primary particles are sintered by calcination and variation in particle size occurs. As a result, it is known that a non-aqueous electrolyte secondary battery in which a positive electrode active material with an unstable crystal structure is used as the positive electrode is inferior in cycle property and thermal stability.

However, by mixing the precursor compound containing Ni with the lithium compound to prepare the mixture and subjecting the mixture to the preliminary calcination under a non-oxygen atmosphere, Ni reduced to be divalent, i.e., $Ni^{2+}$, is positioned uniformly in the crystal structure within the primary particles, and some of Li which should enter into a crystal lattice of the finally obtained positive electrode active material is uniformly substituted with this $Ni^{2+}$, and fixed. In this way, some of Ni being present in the metal-site is fixed as $Ni^{2+}$ in the Li-site, so that cation mixing of $Ni^{2+}$ in the Li-site can be brought into a saturation state. As a result, it is considered that an electrostatic bonding force between $Ni^{2+}$ in the Li-site and oxygen in the crystal structure increases, and a kind of pillar effect in the Li-site is exhibited, hence, it is considered that the crystal structure is stabilized even if the Ni content is high.

Therefore, it is considered that expansion and contraction of the crystal structure by desorption and insert of Li during charge/discharge can be reduced when the positive electrode active material is configured to a non-aqueous electrolyte secondary battery, thus, the crystal structure is stabilized, hence, it is considered that improvement of cycle property and thermal stability can be realized. In addition, it is considered that since the electrostatic bonding force between $Ni^{2+}$ in the Li-site and oxygen increases as described above, the crystal structure is stabilized during charge/discharge, and release of oxygen can be suppressed, resulting in excellent thermal stability.

The non-oxygen atmosphere in the step (2) may be an atmosphere in which substantially no oxygen exists, and is preferably, for example, an atmosphere with an oxygen concentration of 1vol% or less, further 0.8vol% or less, and particularly 0.1vol% or less. The atmosphere with an oxygen concentration of 1vol% or less may be, for example, at least one of rare gases atmosphere such as an argon atmosphere, a nitrogen atmosphere, and the like, and is preferably a nitrogen atmosphere.

A temperature of the preliminary calcination performed under the non-oxygen atmosphere is 450°C to 700°C, preferably 450°C to 650°C, and more preferably 460°C to 630°C. When the temperature of the preliminary calcination is lower than the above lower limit, some of $Ni^{2+}$ being present in the metal-site will not be sufficiently substituted in the Li-site, stabilization of the crystal structure is difficult, and effect of improving cycle property and thermal stability is not obtained. When the temperature of the preliminary calcination is higher than the above upper limit, a temperature difference from a temperature of the main calcination performed in the next step (3) under an oxygen atmosphere becomes too small, and a product obtained by the preliminary calcination becomes over-sintered state. As a result, there is a risk of unexpected crystal growth, and there is a risk that productivity is impaired since a crushing treatment is required before the next step (3). In addition, due to over-sintering, conversion by the main calcination becomes insufficient, and there is a risk that improvement in cycle property and thermal stability cannot be expected.

The temperature of the preliminary calcination is preferably determined in consideration of the composition of the precursor compound and the melting point of the lithium compound used. For example, when lithium hydroxide is used as in Examples of the present invention as described above, by setting the temperature of the preliminary calcination to a temperature higher than 450°C, which is about 20°C lower than lithium hydroxide's melting point of 462°C, the precursor compound and lithium hydroxide can be sufficiently reacted with each other, and unexpected crystal growth and sintering do not occur.

A time of the preliminary calcination performed under the non-oxygen atmosphere is not particularly limited, and may be a time during which Ni being present in the metal-site is retained as $Ni^{2+}$ as in the precursor compound, while some of the $Ni^{2+}$ sufficiently moves to the Li-site. For example, the time is preferably 1 hour to 10 hours, and more preferably 2 hours to 8 hours.

The preliminary calcination in the present invention may be performed under the non-oxygen atmosphere without limitation of equipment. For example, there can be used a static furnace, a roller hearth kiln, or the like, in which a mixture is filled in a sagger and the preliminary calcination is performed. In addition, by using a rotary kiln or the like, in which a mixture is subjected to the preliminary calcination while being fluidized, the reaction can be proceeded more uniformly. When performing the preliminary calcination, since it is necessary to allow the reaction of the mixture to proceed uniformly under the non-oxygen atmosphere, it is preferable to select equipment according to an amount of the mixture to be subjected to the preliminary calcination.

[Step (3)]

In the step (3), the mixture after the preliminary calcination, i.e., the mixture which has already been subjected to the preliminary calcination in the above step (2), is subjected to main calcination under an oxygen atmosphere.

The oxygen atmosphere in the step (3) may be an atmosphere in which substantially only oxygen exists, and is preferably, for example, an atmosphere with an oxygen concentration of 80vol% or more, further 90vol% or more.

A temperature of the main calcination performed under the oxygen atmosphere is preferably 700°C to 880°C, and more preferably 710°C to 830°C. When the temperature of the main calcination is lower than the above lower limit, there is a possibility that a positive electrode active material having the desired crystal structure cannot be obtained, and many unreacted components are present, resulting in deterioration of battery properties of a non-aqueous electrolyte secondary battery in which the obtained positive electrode active material is used as the positive electrode. When the temperature of the main calcination is higher than the above upper limit, there is a possibility that crystal growth proceeds excessively and battery properties of a non-aqueous electrolyte secondary battery in which the obtained positive electrode active material is used as the positive electrode deteriorate.

There is no particular limitation on a time of the main calcination performed under the oxygen atmosphere, and it may be a sufficient time to obtain a positive electrode active material having the desired crystal structure. For example, the time is preferably 1 hour to 15 hours, and more preferably 2 hours to 10 hours.

In the step (3) of the production method of the present invention, after performing the main calcination, for example, at the above exemplified temperature for the above exemplified time under the oxygen atmosphere, the temperature at the time of the main calcination may be lowered (temperature-lowering may be performed) to cool the positive electrode active material to the desired temperature. An atmosphere during the temperature-lowering is not particularly limited, and a low oxygen concentration atmosphere is preferable from the viewpoint that further improvement in cycle property can be achieved in a non-aqueous electrolyte secondary battery in which the obtained positive electrode active material is used as the positive electrode. The low oxygen concentration atmosphere is an atmosphere with a lower oxygen concentration than an oxygen concentration of an air atmosphere. For example, the oxygen concentration may be 20vol% or less, and is preferably 5vol% or less, and more preferably 1vol% or less. The atmosphere with an oxygen concentration of 1vol% or less may be, for example, at least one of rare gases atmosphere such as an argon atmosphere, a nitrogen atmosphere, and the like, and is preferably a nitrogen atmosphere.

When the positive electrode active material obtained by performing the steps (1) to (3) in this order is a positive electrode active material with a high Ni content, such as a positive electrode active material having the composition represented by the formula (I), there is a possibility of increase in an amount of Li compounds which will remain (hereinafter, referred to as "residual Li compounds"), which is the sum of unreacted Li compounds and Li compound components coming out from the crystal structure to the surface layer of particles during the calcination steps, as compared with a positive electrode active material with a low Ni content. An amount of the residual Li compounds can be reduced by, for example, performing a washing treatment on the positive electrode active material or performing a surface treatment on surfaces of primary particles and/or secondary particles of the positive electrode active material.

A method of the surface treatment is not particularly limited. For example, there can be adopted: a method in which fine particles of aluminum oxide are allowed to coat and adhere to the surface layer of particles of the positive electrode active material in a dry mode while applying a shearing force, and then, a heat treatment is performed at about 300°C to about 700°C; a method in which a predetermined amount of the positive electrode active material is allowed to encounter in an aqueous solution prepared by dissolving a predetermined amount of sodium aluminate therein to give a mixture, and the mixture is stirred for about 5 minutes to about 10 minutes, dehydrated and dried, and then heat-treated at about 300°C to about 700°C to coat the surface layer of particles of the positive electrode active material with an aluminum compound; and other methods. In addition to the aluminum compound, for example, boron compounds and tungsten compounds can be used for the surface treatment, and can be selected according to the application.

<Positive electrode active material for non-aqueous electrolyte secondary battery>

Properties of the positive electrode active material for non-aqueous electrolyte secondary batteries obtained by the production method of the present invention cannot be generally determined because the properties vary depending on the composition. As the properties, it is preferable that, for example, an average particle size (D50) and particle size distribution (full width at half maximum (FWHM)) of primary particles, lengths of an a-axis and a c-axis of a crystal lattice, a crystallite size, and a cation mixing amount are within the ranges shown below, respectively.

The average particle size (D50) of the primary particles is preferably about 50nm to about 220nm, and the particle size distribution (full width at half maximum (FWHM)) of the primary particles is preferably about 80nm to about 300nm, and more preferably about 80nm to about 250nm.

In the present specification, the average particle size (D50) is a value obtained based on an electron micrograph (SEM photograph) of the primary particles of the positive electrode active material, which is photographed under the following conditions using a scanning electron microscope SEM-EDX "S-4300" commercially available from Hitachi High-Tech Corporation. In this procedure, the scale displayed in the electron micrograph is used as the reference scale. Note that 100 or more primary particles were observed.

(Conditions)

Accelerating voltage: 10kV

WD: 8mm
Magnification: 20000 times

In the present specification, the particle size distribution (full width at half maximum (FWHM)) is a value obtained from a particle size distribution curve showing relationship between a particle size and a frequency when the average particle size (D50) is determined.

The length of the a-axis of the crystal lattice is preferably 2.840Å to 2.890Å, and more preferably 2.845Å to 2.885Å. The length of the c-axis of the crystal lattice is preferably 14.160Å to 14.220Å, and more preferably 14.170Å to 14.210Å.

The crystallite size is preferably 50nm to 250nm, and more preferably 60nm to 230nm. When the crystallite size is smaller than the above lower limit, there is a possibility that the crystal structure of the positive electrode active material becomes unstable. When the crystallite size is larger than the above upper limit, there is a possibility that battery properties of a non-aqueous electrolyte secondary battery in which the positive electrode active material is used as the positive electrode deteriorate.

The cation mixing amount generally denotes the following amount. Originally, a seat occupancy rate of Li in the Li-site is 100%, however, during calcination when producing a positive electrode active material containing Ni, Ni contained mainly in the metal-site becomes $Ni^{2+}$ and the $Ni^{2+}$ moves to the Li-site. An amount of a metal which moves to the Li-site and is substituted with Li in this way is called the cation mixing amount. It is known that the cation mixing amount is usually about 0.1% to about 6.0%, however, in general, since a smaller cation mixing amount is desired, it is adjusted to about 0.1% to about 2.0%.

Therefore, even in the positive electrode active material obtained by the production method of the present invention, the cation mixing amount is derived from the amount of $Ni^{2+}$ substituted in the Li-site. However, when divalent element(s) other than $Ni^{2+}$ is(are) present, the cation mixing amount varies, as is supposed, depending on an amount of the divalent element(s) substituted in the Li-site, a molar ratio of Li to Ni and any other element(s), etc., and the cation mixing amount is preferably 2.3% to 6.0%, more preferably 2.8% to 6.0%, and particularly preferably 3.2% to 6.0%.

In the present specification, the lengths of the a-axis and the c-axis of the crystal lattice, the crystallite size, and the cation mixing amount are values determined, respectively, by obtaining XRD data of the positive electrode active material in accordance with the following method, and then, performing Rietveld analysis.

After obtaining the XRD data of the positive electrode active material under the following X-ray diffraction conditions by using X-ray diffractometer "SmartLab" commercially available from Rigaku Corporation, the Rietveld analysis is performed by using the XRD data with reference to R.A. Young, ed., "The Rietveld Method", Oxford University Press (1992). Further, the analysis is performed so that S value in fitting is in a range of 1.20 to 1.45.

(X-ray diffraction conditions)

| | |
|---|---|
| X-ray source: | Cu-Kα ray |
| Accelerating voltage and current: | 45kV and 200mA |
| Sampling width: | 0.02deg. |
| Scan range: | 15deg. to 122deg. |
| Scan speed: | 1.2°/min. step |
| Divergence slit width: | 0.65deg. |
| Light receiving slit width: | 0.2mm |
| Scattering slit: | 0.65deg. |

The positive electrode active material obtained by the production method of the present invention is also characterized by thermal analysis results when used as the positive electrode of a non-aqueous electrolyte secondary battery, in addition to the physical properties described above.

The positive electrode active material obtained by the production method of the present invention is in a state of cation mixing, that is, in a state wherein many Ni elements are present in the Li-site, as compared with a positive electrode active material having the same composition obtained by a conventional production method. Therefore, in the positive electrode active material obtained by the production method of the present invention, it is considered that a certain amount of Ni is present in the Li-site even in a state where Li is extracted (in a charged state), and structural collapse during heating slows down, and as a result, a peak height at a peak top temperature becomes lower. The peak top temperature cannot be generally determined because it varies depending on the composition of the positive electrode active material. The peak top temperature is preferably 220°C to 280°C, and the peak height at the peak top temperature is preferably 0.25%/°C to 0.45%/°C, and more preferably 0.25%/°C to 0.40%/°C.

In the present specification, the peak top temperature and the peak height at the peak top temperature are values determined, respectively, by performing thermogravimetric differential thermal analysis (TG-DTA measurement) of the positive electrode active material in accordance with the following method, and then, by creating a graph (see FIG. 3) showing relationship between: a temperature (T) as a horizontal axis; and a value (dW/dT) as a vertical axis, which is obtained by differentiating a weight change (W) by the temperature (T), based on the obtained results of the analysis.

The TG-DTA measurement is performed in accordance with the following method and measurement conditions by using thermogravimetric differential thermal analysis (TG-DTA) device "DTG-60H" commercially available from Shimadzu Corporation. A coin cell is produced by using the positive electrode active material as the positive electrode in accordance with the method described later. After the coin cell is charged (cc-cv) to 4.30V at a current density of 20mA/g in an environment of 25°C, the charged coin cell is disassembled in a glove box with an argon atmosphere, and the positive electrode is taken out. The taken-out positive electrode is washed in dimethyl carbonate for 10 minutes and dried under vacuum, and then, positive electrode material powder is scraped off from an aluminum foil in the glove box. Then, 15mg of the obtained positive electrode material powder is filled in a platinum vessel, and the platinum vessel filled with the powder is gently placed on a balance on a measurement side of the TG-DTA device.

(TG-DTA measurement conditions)

Reference: Platinum vessel filled with 15mg of $Al_2O_3$
Maximum temperature: 500°C
Temperature rising rate: 10°C/min.
Measurement environment: Nitrogen atmosphere (flow rate: 200mL/min.)

<Non-aqueous electrolyte secondary battery>

The positive electrode active material for non-aqueous electrolyte secondary batteries of the present invention can be suitably used as the positive electrode of a non-aqueous electrolyte secondary battery.

The non-aqueous electrolyte secondary battery is constituted of the above positive electrode, a negative electrode, and an electrolytic solution containing an electrolyte.

The positive electrode is produced in accordance with an ordinary method. That is, a conductive agent and a binder are added to and mixed with the positive electrode active material of the present invention. As the conductive agent, for example, acetylene black, carbon black, graphite, and the like are preferable. As the binder, for example, polytetrafluoroethylene, polyvinylidene fluoride, and the like are preferable.

As the negative electrode, for example, there can be used: not only negative electrode active materials such as metallic lithium, graphite and low crystalline carbon materials; but also at least one nonmetallic element or metallic element selected from the group consisting of Si, Al, Sn, Pb, Zn, Bi, and Cd, and an alloy containing the element(s) or a chalcogen compound containing the element(s).

As a solvent of the electrolytic solution, for example, there can be used an organic solvent including at least one of: carbonates such as ethylene carbonate, propylene carbonate, dimethyl carbonate and diethyl carbonate; and ethers such as dimethoxyethane.

As the electrolyte, for example, there can be used at least one of lithium salts such as lithium perchlorate and lithium tetrafluoroborate in addition to lithium hexafluorophosphate ($LiPF_6$), which are dissolved in the above solvent.

Negative electrode active materials such as metallic lithium, graphite and low crystalline carbon materials are often used as the negative electrode of a non-aqueous electrolyte secondary battery as described above. In addition, there is an increasing trend to use an alloy material containing nonmetal(s) or metal(s) such as Si and Sn as the negative electrode active material. However, the negative electrode using such an alloy material has a very high initial irreversible capacity (very low initial charge/discharge efficiency) compared to a negative electrode using metallic lithium, graphite, low crystalline carbon materials, etc. Therefore, before the negative electrode using such an alloy material is used, a pre-dope process for lithium should be performed and the excess lithium should be consumed. That is, the negative electrode using such an alloy material should be used after a separate charging process is performed.

The non-aqueous electrolyte secondary battery in which there is used the positive electrode active material obtained by the production method of the present invention as the positive electrode has an almost equivalent initial charge capacity to an initial charge capacity of a non-aqueous electrolyte secondary battery in which there is used a positive electrode active material obtained by a conventional production method. However, there is a tendency that each of an initial discharge capacity and an initial charge/discharge efficiency of the non-aqueous electrolyte secondary battery relating to the present invention becomes lower than each of the non-aqueous electrolyte secondary battery relating to the conventional production method.

That is, there is a tendency that the initial irreversible capacity of the non-aqueous electrolyte secondary battery relating to the present invention becomes higher than that of the non-aqueous electrolyte secondary battery relating to the conventional production method. As a result, since the excess lithium at the positive electrode during the initial charge can be reacted with a material of the negative electrode, it is supposed that a process equivalent to the pre-dope process for lithium can be performed. That is, when the negative electrode made of the above alloy material and the positive electrode made of the positive electrode active material obtained by the production method of the present invention are used in combination, since the above pre-dope process for lithium can be easily performed at the positive electrode instead of the negative electrode, there is an advantage that utility value of the alloy material as the negative electrode active material increases.

<Function>

The positive electrode active material easily obtained by the production method of the present invention can impart excellent cycle property, particularly excellent cycle property under high voltage, and also can impart excellent thermal stability, to the non-aqueous electrolyte secondary batteries.

EXAMPLES

The present invention will be concretely described below with reference to specific examples of the present invention and comparative examples. However, the present invention is not limited to these examples.

<Preparation of Precursor compound>

[Precursor compound 1]

A nickel sulfate aqueous solution, a cobalt sulfate aqueous solution, and an aluminum sulfate aqueous solution were mixed with each other so that a proportion (molar ratio) of Ni, Co, and Al was adjusted to Ni : Co : Al = 85 : 10 : 5 to give a mixed aqueous solution. In a reaction vessel was previously prepared 10L of pure water as a mother liquor, containing 300g of a sodium hydroxide aqueous solution and 500g of an ammonia solution, and an atmosphere in the reaction vessel was purged with nitrogen gas at a flow rate of 0.7L/min., and a reaction was carried out also under a nitrogen atmosphere.

Thereafter, the mixed aqueous solution, the sodium hydroxide aqueous solution, and the ammonia solution were dropped simultaneously at a prescribed speed with rotating agitating blades at 1000rpm. By a crystallization reaction in which a dropping amount of alkaline solutions, i.e., the sodium hydroxide aqueous solution and the ammonia solution, was adjusted so that pH of a reaction system was 12.5, the reaction system was coprecipitated so that agglomerated particles were formed by crystallization of Ni, Co, and Al to obtain a coprecipitate.

Thereafter, slurry in the reaction vessel was separated into solid and liquid, and the solid was further washed with pure water to reduce residual impurities. Then, a caked coprecipitate was dried at 110°C for 12 hours under an atmosphere to obtain a precursor compound 1.

[Precursor compound 2]

A precursor compound 2 was obtained in the same manner as for the precursor compound 1, except that the nickel sulfate aqueous solution, the cobalt sulfate aqueous solution, and the aluminum sulfate aqueous solution were mixed with each other so that the proportion (molar ratio) of Ni, Co, and Al was adjusted to Ni : Co : Al = 90 : 5 : 5.

<Composition of Precursor compound and Positive electrode active material>

Compositions of the precursor compound and the positive electrode active material were determined in accordance with the following method. A sample, i.e., 0.2g of the precursor compound or the positive electrode active material, was heated and dissolved in 25mL of a hydrochloric acid solution having a concentration of 20% to give a solution, and the solution was cooled. The cooled solution was transferred to a volumetric flask having a capacity of 100mL and then, pure water was added thereto to prepare an adjusted solution. A quantity of each element in the precursor compound or the positive electrode active material was determined by using the adjusted solution and ICP-AES Spectrometer "Optima 8300" commercially available from PerkinElmer Japan Co., Ltd.

<Coin cell assembled by using Positive electrode active material>

A coin cell having 2032 size was assembled by using a positive electrode containing the positive electrode active material, a negative electrode, and an electrolytic solution, which were manufactured in accordance with the following procedures, respectively.

(Positive electrode)

By using: acetylene black and graphite (acetylene black : graphite = 1 : 1 (weight ratio)) as the conductive agent; and polyvinylidene fluoride as the binder, the positive electrode active material, the conductive agent, and the binder (positive electrode active material: conductive agent: binder = 90 : 6 : 4 (weight ratio)) were blended with each other, they were mixed with N-methylpyrrolidone to give slurry, and metallic aluminum foil was coated with the slurry. The coated aluminum foil was dried at 110°C to give a sheet. A sample sheet having a diameter of 15mm was stamped out from the sheet and crimped so that a density of the sample sheet became to be 3.0g/cm$^3$ to give a positive electrode.

(Negative electrode)

A sample sheet having a diameter of 16mm was stamped out from metallic lithium foil to give a negative electrode having a thickness of 500$\mu$m.

(Electrolytic solution)

A mixture solvent of ethylene carbonate (EC) and dimethyl carbonate (DMC) was prepared so that EC : DMC = 1 : 2 (volume ratio), and 1M of $LiPF_6$ as an electrolyte was mixed with the mixture solvent to give an electrolytic solution.

<Initial charge capacity, Initial discharge capacity, and Initial charge/discharge efficiency of Non-aqueous electrolyte secondary battery>

After the coin cell assembled in accordance with the above method was subjected to constant-current charge at a current density of 20mA/g up to 4.30V (upper limit voltage) under an environment at 25°C, the coin cell was subjected to constant-voltage charge until the current density reached 2mA/g. A capacity at this constant-voltage charge after this constant-current charge was indicated as an initial charge capacity (mAh/g).
Then, after pause for 5 minutes, the coin cell was subjected to constant-current discharge at a current density of 20mA/g down to 2.80V under the same environment, and an initial discharge capacity (mAh/g) was measured after pause for 5 minutes. A series of steps up to measurement of the initial discharge capacity was defined as a charge/discharge cycle under condition A.
By using the measured value of the initial charge capacity and the measured value of the initial discharge capacity, an initial charge/discharge efficiency was calculated in accordance with the following equation.

$$\text{Initial charge/discharge efficiency (\%)}$$
$$= (\text{Initial discharge capacity/Initial charge capacity}) \times 100$$

<Cycle property of Non-aqueous electrolyte secondary battery>

(1) Cycle retention rate under Upper limit voltage of 4.30V (hereinafter, referred to as "4.3V-Cycle retention rate")

After the above measurement of the initial discharge capacity, 100 cycles of charge/discharge were performed under the above condition A. By using the measured value of a discharge capacity at the first cycle and the measured value of a discharge capacity at the 100th cycle, a 4.3V-cycle retention rate was calculated in accordance with the following equation.

$$\text{4.3V-Cycle retention rate (\%)}$$
$$= (\text{Discharge capacity at the 100th cycle/Discharge capacity at the first cycle}) \times 100$$

(2) Cycle retention rate under Upper limit voltage of 4.40V (hereinafter, referred to as "4.4V-Cycle retention rate")

Under the same condition as the condition A except that the upper limit voltage was changed from 4.30V to 4.40V, 100 cycles of charge/discharge were performed, and a 4.4V-cycle retention rate was calculated in accordance with the following equation.

4.4V-Cycle retention rate (%)

= (Discharge capacity at the 100th cycle/Discharge capacity at the first cycle) × 100

(3) Cycle retention rate under Upper limit voltage of 4.50V (hereinafter, referred to as "4.5V-Cycle retention rate")

Under the same condition as the condition A except that the upper limit voltage was changed from 4.30V to 4.50V, 100 cycles of charge/discharge were performed, and a 4.5V-cycle retention rate was calculated in accordance with the following equation.

4.5V-Cycle retention rate (%)

= (Discharge capacity at the 100th cycle/Discharge capacity at the first cycle) × 100

<Example 1>

The precursor compound 1 and anhydrous lithium hydroxide were weighed so that a ratio (molar ratio) of Li to the total amount of Ni, Co, and Al was Li/(Ni + Co + Al) = 1.03, and these were mixed with each other in a non-solvent system by using a mixer to prepare a mixture.
Then, by using an electric furnace, the mixture was subjected to preliminary calcination at 500°C for 6 hours under a nitrogen atmosphere (oxygen concentration: 1vol% or less).
The mixture after the above preliminary calcination was subjected to main calcination at a maximum temperature of 750°C for 3 hours under an oxygen atmosphere (oxygen concentration: 97vol%). Then, under a nitrogen atmosphere (oxygen concentration: 1vol% or less), the mixture after the main calcination was cooled by lowering a temperature at the time of the main calcination to obtain a positive electrode active material.

<Comparative Example 1>

A positive electrode active material was obtained in the same manner as in Example 1, except that the mixture was subjected to the calcination under the conditions of the main calcination without performing the preliminary calcination.

<Comparative Example 2>

A positive electrode active material was obtained in the same manner as in Example 1, except that the temperature of the preliminary calcination was changed to 400°C.
Calcination conditions in Example 1 and Comparative Examples 1 to 2 are summarized in Table 1.
As the properties of the positive electrode active materials obtained in Example 1 and Comparative Examples 1 to 2, the average particle size (D50) and the particle size distribution (FWHM) of the primary particles, the lengths of the a-axis and the c-axis of the crystal lattice, the crystallite size, the cation mixing amount, the peak top temperature, and the peak height at the peak top temperature were determined in accordance with the above respective methods. These results are shown in Table 2.
As the battery properties of the non-aqueous electrolyte secondary battery in which there was used each of the positive electrode active materials obtained in Example 1 and Comparative Examples 1 to 2 as the positive electrode, the initial charge capacity, the initial discharge capacity, the initial charge/discharge efficiency, the 4.3V-cycle retention rate, the 4.4V-cycle retention rate, and the 4.5V-cycle retention rate were determined in accordance with the above respective methods. These results are shown in Table 3.
FIG. 1 shows electron micrographs (SEM photographs) of the primary particles of the positive electrode active materials obtained in Example 1 and Comparative Examples 1 to 2. FIG. 2 includes particle size distribution curves showing relationship between the particle size and the frequency of the positive electrode active materials obtained in Example 1 and Comparative Examples 1 to 2.

FIG. 3 includes graphs showing relationship between the temperature (T) and the value (dW/dT) obtained by differentiating the weight change (W) by the temperature (T), based on thermogravimetric differential thermal analysis (TG-DTA measurement) results of the positive electrode active materials obtained in Example 1 and Comparative Examples 1 to 2.

FIGs. 4, 5, and 6 include graphs prepared by plotting the cycle retention rate in each cycle in a 100-cycle charge/discharge test in respectively determining the "4.3V-cycle retention rate" of the above item (1), the "4.4V-cycle retention rate" of the above item (2), and the "4.5V-cycle retention rate" of the above item (3), for the non-aqueous electrolyte secondary battery in which there is used each of the positive electrode active materials obtained in Example 1 and Comparative Examples 1 to 2 as the positive electrode. The cycle retention rate in each cycle was calculated in accordance with the following equation (n = 1 to 100).

Cycle retention rate (%)

= (Discharge capacity at the n-th cycle/Discharge capacity at the first cycle) × 100

[Table 1]

| | Preliminary calcination condition | | | Main calcination condition | | | |
|---|---|---|---|---|---|---|---|
| | Atmosphere | Temperature (°C) | Time (hr) | Atmosphere during calcination | Temperature (°C) | Time (hr) | Atmosphere during temperature-lowering |
| Ex. 1 | Nitrogen | 500 | 6 | Oxygen | 750 | 3 | Nitrogen |
| Com. Ex. 1 | - | - | - | Oxygen | 750 | 3 | Nitrogen |
| Com. Ex. 2 | Nitrogen | 400 | 6 | Oxygen | 750 | 3 | Nitrogen |

[Table 2]

| | Property of positive electrode active material | | | | | | | |
|---|---|---|---|---|---|---|---|---|
| | Average particle size of primary particles (D50) (nm) | Particle size distribution of primary particles (FWHM) (nm) | Length of a-axis (Å) | Length of c-axis (Å) | Crystallite size (nm) | Cation mixing amount (%) | Peak top temperature (°C) | Peak height at peak top temperature (%/°C) |
| Ex. 1 | 140 | 159 | 2.8706 | 14.197 | 110 | 3.6 | 240 | 0.30 |
| Com. Ex. 1 | 230 | 316 | 2.8686 | 14.191 | 200 | 2.1 | 239 | 0.47 |
| Com. Ex. 2 | 100 | 128 | 2.8685 | 14.193 | 170 | 1.8 | 239 | 0.48 |

[Table 3]

| | Battery property of non-aqueous electrolyte secondary battery | | | | | |
|---|---|---|---|---|---|---|
| | Initial charge capacity (mAh/g) | Initial discharge capacity (mAh/g) | Initial charge/ discharge efficiency (%) | 4.3V-Cycle retention rate (%) | 4.4V-Cycle retention rate (%) | 4.5V-Cycle retention rate (%) |
| Ex. 1 | 224.7 | 170.4 | 75.8 | 89.6 | 82.7 | 80.2 |

(continued)

| | Battery property of non-aqueous electrolyte secondary battery | | | | | |
|---|---|---|---|---|---|---|
| | Initial charge capacity (mAh/g) | Initial discharge capacity (mAh/g) | Initial charge/ discharge efficiency (%) | 4.3V-Cycle retention rate (%) | 4.4V-Cycle retention rate (%) | 4.5V-Cycle retention rate (%) |
| Com. Ex. 1 | 226.5 | 182.3 | 80.5 | 62.9 | 57.7 | 64.8 |
| Com. Ex. 2 | 227.0 | 179.4 | 79.0 | 66.5 | 57.6 | 64.7 |

The positive electrode active material obtained according to the production method of the present invention in Example 1 has a smaller crystallite size and a significantly larger cation mixing amount than those of the positive electrode active materials obtained according to the conventional production method in Comparative Examples 1 to 2. Regarding the thermal analysis results, even though the peak top temperature of the positive electrode active material of Example 1 is about the same as the peak top temperature of the positive electrode active materials of Comparative Examples 1 to 2, the peak height at the peak top temperature of the positive electrode active material of Example 1 is about 60% of the peak height of the positive electrode active materials of Comparative Examples 1 to 2. From these facts, in the positive electrode active material of Example 1, it is considered that some of Ni being present in the metal-site is sufficiently substituted with Li as $Ni^{2+}$ and the $Ni^{2+}$ is fixed in the Li-site, cation mixing becomes to be in a saturated state, the electrostatic bonding force with oxygen increases to exhibit the pillar effect, and the crystal structure is stabilized.

The non-aqueous electrolyte secondary battery in which there is used the positive electrode active material having such properties of Example 1 as the positive electrode is excellent in cycle property, and particularly, very excellent in cycle property even under high voltages of 4.4V and 4.5V, as compared with the non-aqueous electrolyte secondary batteries in which there are respectively used the positive electrode active materials of Comparative Examples 1 to 2 as the positive electrode.

<Example 2>

The precursor compound 2 and anhydrous lithium hydroxide were weighed so that a ratio (molar ratio) of Li to the total amount of Ni, Co, and Al was Li/(Ni + Co + Al) = 1.03, and these were mixed with each other in a non-solvent system by using a mixer to prepare a mixture.

Then, by using an electric furnace, the mixture was subjected to preliminary calcination at 500°C for 6 hours under a nitrogen atmosphere (oxygen concentration: 1vol% or less).

The mixture after the above preliminary calcination was subjected to main calcination at a maximum temperature of 750°C for 2 hours under an oxygen atmosphere (oxygen concentration: 97vol%). Then, under a nitrogen atmosphere (oxygen concentration: 1vol% or less), the mixture after the main calcination was cooled by lowering a temperature at the time of the main calcination to obtain a positive electrode active material.

<Example 3>

A positive electrode active material was obtained in the same manner as in Example 2, except that under an oxygen atmosphere (oxygen concentration: 97vol%), the mixture after the main calcination was cooled by lowering a temperature at the time of the main calcination.

Calcination conditions in Examples 2 to 3 are summarized in Table 4.

As the properties of the positive electrode active materials obtained in Examples 2 to 3, the lengths of the a-axis and the c-axis of the crystal lattice, the crystallite size, and the cation mixing amount were determined in accordance with the above respective methods. These results are shown in Table 5.

As the battery properties of the non-aqueous electrolyte secondary battery in which there was used each of the positive electrode active materials obtained in Examples 2 to 3 as the positive electrode, the initial charge capacity, the initial discharge capacity, and the initial charge/discharge efficiency were determined in accordance with the above respective methods. These results are shown in Table 6.

[Table 4]

| | | Preliminary calcination condition | | | Main calcination condition | | |
|---|---|---|---|---|---|---|---|
| | Atmosphere | Temperature (°C) | Time (hr) | Atmosphere during calcination | Temperature (°C) | Time (hr) | Atmosphere during temperature-lowering |
| Ex. 2 | Nitrogen | 500 | 6 | Oxygen | 750 | 2 | Nitrogen |
| Ex. 3 | Nitrogen | 500 | 6 | Oxygen | 750 | 2 | Oxygen |

[Table 5]

| | Property of positive electrode active material | | | |
|---|---|---|---|---|
| | Length of a-axis (Å) | Length of c-axis (Å) | Crystallite size (nm) | Cation mixing amount (%) |
| Ex. 2 | 2.8740 | 14.208 | 160 | 5.2 |
| Ex. 3 | 2.8703 | 14.200 | 170 | 2.1 |

[Table 6]

| | Battery property of non-aqueous electrolyte secondary battery | | |
|---|---|---|---|
| | Initial charge capacity (mAh/g) | Initial discharge capacity (mAh/g) | Initial charge/discharge efficiency (%) |
| Ex. 2 | 222.3 | 170.6 | 76.7 |
| Ex. 3 | 237.8 | 192.5 | 80.9 |

Each of the positive electrode active materials obtained according to the production method of the present invention in Examples 2 to 3 has a relatively small crystallite size. In particular, in the positive electrode active material of Example 2 obtained by lowering the temperature at the time of the main calcination under a low oxygen concentration atmosphere after performing the main calcination, it is considered that more Ni being present in the metal-site is substituted with Li as $Ni^{2+}$ and the $Ni^{2+}$ is fixed in the Li-site, and cation mixing becomes to be in a sufficiently saturated state.

It can be understood that each of the non-aqueous electrolyte secondary batteries in which there are respectively used the positive electrode active materials having such properties of Examples 2 to 3 as the positive electrode has a small value of the initial charge/discharge efficiency and can realize excellent cycle property. By comparing Example 2 with Example 3, it can be understood that when the positive electrode active material of Example 2 obtained by lowering the temperature at the time of the main calcination under a low oxygen concentration atmosphere after performing the main calcination, the value of the initial charge/discharge efficiency is smaller and more excellent cycle property can be realized.

INDUSTRIAL APPLICABILITY

The positive electrode active material obtained by the production method according to the present invention can impart excellent cycle property, particularly excellent cycle property under high voltage, and can also impart excellent thermal stability to non-aqueous electrolyte secondary batteries. Therefore, the positive electrode active material is suitable as the positive electrode of non-aqueous electrolyte secondary batteries.

Claims

1. A method for producing a positive electrode active material for non-aqueous electrolyte secondary batteries, containing at least lithium and nickel, the method comprising at least, in this order:

a step (1) of mixing a precursor compound containing at least nickel with a lithium compound in a non-solvent system to prepare a mixture;
a step (2) of subjecting the mixture to preliminary calcination at 450°C to 700°C under a non-oxygen atmosphere; and
a step (3) of subjecting the mixture after the preliminary calcination to main calcination under an oxygen atmosphere.

[FIG. 1]

(a)

(b)

(c)

[FIG. 2]

[FIG. 3]

[FIG. 4]

[FIG. 5]

[FIG. 6]

## INTERNATIONAL SEARCH REPORT

| | International application No. |
|---|---|
| | PCT/JP2021/022973 |

**A. CLASSIFICATION OF SUBJECT MATTER**
Int.Cl. C01G53/00(2006.01)i, H01M4/525(2010.01)i
FI: H01M4/525, C01G53/00A

According to International Patent Classification (IPC) or to both national classification and IPC

**B. FIELDS SEARCHED**

Minimum documentation searched (classification system followed by classification symbols)
Int.Cl. C01G53/00, H01M4/525

Documentation searched other than minimum documentation to the extent that such documents are included in the fields searched
| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2018-14325 A (SAMSUNG SDI CO., LTD.) 25 January 2018 (2018-01-25) | 1 |
| A | JP 2011-82150 A (HITACHI MAXELL LTD.) 21 April 2011 (2011-04-21) | 1 |
| A | JP 2007-242420 A (SANYO ELECTRIC CO., LTD.) 20 September 2007 (2007-09-20) | 1 |
| A | WO 2019/107835 A1 (LG CHEMICAL LTD.) 06 June 2019 (2019-06-06) | 1 |
| A | US 2018/0159128 A1 (SAMSUNG SDI CO., LTD.) 07 June 2018 (2018-06-07) | 1 |
| A | JP 2005-25975 A (MITSUBISHI CHEMICAL CORPORATION) 27 January 2005 (2005-01-27) | 1 |

☒ Further documents are listed in the continuation of Box C.    ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 12 July 2021 | 20 July 2021 |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

<table>
<tr><td colspan="2" align="center"><b>INTERNATIONAL SEARCH REPORT</b></td><td colspan="2">International application No.<br>PCT/JP2021/022973</td></tr>
<tr><td colspan="4">C (Continuation).   DOCUMENTS CONSIDERED TO BE RELEVANT</td></tr>
<tr><td>Category*</td><td colspan="2" align="center">Citation of document, with indication, where appropriate, of the relevant passages</td><td>Relevant to claim No.</td></tr>
<tr><td>P, X</td><td colspan="2">WO 2020/209239 A1 (JFE MINERAL CO., LTD.) 15 October 2020 (2020-10-15)</td><td>1</td></tr>
</table>

Form PCT/ISA/210 (second sheet) (January 2015)

EP 4 169 879 A1

# INTERNATIONAL SEARCH REPORT
Information on patent family members

International application No.

PCT/JP2021/022973

| JP 2018-14325 A | 25 January 2018 | JP 2020-64849 A<br>US 2018/0026267 A1<br>EP 3272711 A1<br>KR 10-2018-0010123 A<br>CN 107644982 A |
| --- | --- | --- |
| JP 2011-82150 A | 21 April 2011 | US 2011/0269018 A1<br>WO 2010/147179 A1<br>KR 10-2011-0126683 A<br>CN 102356487 A |
| JP 2007-242420 A | 20 September 2007 | (Family: none) |
| WO 2019/107835 A1 | 06 June 2019 | EP 3651247 A1<br>KR 10-2019-0063408 A<br>CN 111033834 A |
| US 2018/0159128 A1 | 07 June 2018 | EP 3331066 A1<br>CN 108155357 A<br>KR 10-2018-0063849 A |
| JP 2005-25975 A | 27 January 2005 | (Family: none) |
| WO 2020/209239 A1 | 15 October 2020 | (Family: none) |

Form PCT/ISA/210 (patent family annex) (January 2015)

24

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H10316431 A
- JP 2002184403 A
- JP 2010052988 A

**Non-patent literature cited in the description**

- **R.A. YOUNG.** The Rietveld Method. Oxford University Press, 1992